# EUROPEAN PATENT APPLICATION

(11) **EP 4 614 538 A2**
(43) Date of publication of application: **10.09.2025**
(21) Application number: 25162177.7
(22) Date of filing: 06.03.2025
(51) Int. Cl.: H01F 27/26, H01F 3/10, H01F 3/12, H01F 3/14, H01F 27/38, H01F 37/00

(54) **INDUCTOR AND SINGLE-PHASE POWER CONVERTER**

(30) Priority: 07.03.2024 CN 202410263644
(71) Applicant: Huawei Digital Power Technologies Co., Ltd., Shenzhen, Guangdong 518043 (CN)
(72) Inventor: CHEN, Yue, Shenzhen, 518043 (CN); MA, Zheng, Shenzhen, 518043 (CN); ZHANG, Jiangteng, Shenzhen, 518043 (CN); QIN, Zhendong, Shenzhen, 518043 (CN)
(74) Representative: Gill Jennings & Every LLP

(57) **Abstract**

This disclosure provides an inductor and a single-phase power converter, and belongs to the field of inductor technologies. The inductor includes a first magnetic core, a second magnetic core, a first winding, a second winding, and a third magnetic core. The first winding is wound around a first middle column of the first magnetic core, and the second winding is wound around a second middle column of the second magnetic core. The third magnetic core is located between the first winding and the second winding, the third magnetic core has a through hole, and both the first middle column and the second middle column extend into the through hole. When a direction of a magnetic field generated by the first winding is the same as a direction of a magnetic field generated the second winding, the first magnetic core and the second magnetic core generate common-mode inductance. When a direction of a magnetic field generated by a third winding is opposite to a direction of a magnetic field generated a fourth winding, the third magnetic core generates differential-mode inductance. In addition, because the third magnetic core has the through hole, the third magnetic core does not separate the first middle column from the second middle column, so that magnetic resistance between the first middle column and the second middle column is small. This helps the first magnetic core and the second magnetic core generate large common-mode inductance.

## Description

### TECHNICAL FIELD

This disclosure relates to the field of inductor technologies, and in particular, to an inductor and a single-phase power converter.

### BACKGROUND

An inverter is a converter that converts a direct current into an alternating current. In a related technology, an inverter includes a direct current/direct current conversion circuit, a direct current/alternating current conversion circuit, a differential-mode inductor, and a common-mode inductor. The differential-mode inductor is configured to provide differential-mode inductance, to reduce an amplitude of a ripple current in a circuit. The common-mode inductor is configured to provide common-mode inductance, to suppress common-mode interference in the circuit.

In the related technology, the differential-mode inductor and the common-mode inductor occupy a large area of a printed circuit board (PCB). Consequently, the inverter has disadvantages of a large size, a heavy weight, and high costs.

### SUMMARY

This disclosure provides an inductor and a single-phase power converter. The inductor can generate both differential-mode inductance and common-mode inductance, thereby implementing integration of a differential-mode inductor and a common-mode inductor. Technical solutions of the inductor and the single-phase power converter are described below.

According to a first aspect, this disclosure provides an inductor. The inductor includes a first magnetic core, a second magnetic core, a first winding, a second winding, and a third magnetic core. The first magnetic core includes a first bottom, a first middle column, and two first side columns. The two first side columns and the first middle column are fastened to the first bottom, and the first middle column is located between the two first side columns. The second magnetic core includes a second bottom, a second middle column, and two second side columns. The two second side columns and the second middle column are fastened to the second bottom, and the second middle column is located between the two second side columns. The first middle column is opposite to the second middle column, and the two first side columns are respectively opposite to the two second side columns. The first winding is wound around the first middle column, and the second winding is wound around the second middle column. The third magnetic core is located between the first winding and the second winding, the third magnetic core has a through hole, and both the first middle column and the second middle column extend into the through hole.

The first magnetic core and the second magnetic core may be E-type magnetic cores, PQ-type magnetic cores, EI-type magnetic cores, or the like. The third magnetic core is an I-type magnetic core. The third magnetic core may alternatively be referred to as a differential magnetic film (differential magnetic film). The first magnetic core and the second magnetic core may be symmetrically arranged with respect to the third magnetic core, and a material of the first magnetic core may be the same as a material of the second magnetic core.

When the inductor is applied to a single-phase power converter, two wiring terminals of the first winding are connected to an N-pole output circuit of a direct current/alternating current conversion circuit, and two wiring terminals of the second winding are connected to an L-pole output circuit of the direct current/alternating current conversion circuit. Alternatively, two wiring terminals of the first winding are connected to an L-pole output circuit, and two wiring terminals of the second winding are connected to an N-pole output circuit. At a same moment, a direction of a working current of the N-pole output circuit is opposite to a direction of a working current of the L-pole output circuit. Therefore, a working current is a differential-mode current. In addition, in some cases, the N-pole output circuit and the L-pole output circuit generate a common-mode current, causing common-mode interference or referred to as electromagnetic interference (EMI). Therefore, the common-mode current is an interference current.

According to the technical solution provided in this disclosure, when a first current (the first current is one of a differential-mode current and a common-mode current) is applied to the first winding and the second winding, a direction of a magnetic field generated by the first winding is opposite to a direction of a magnetic field generated the second winding. In this case, magnetic fluxes of the first winding and the second winding on the first middle column, the second middle column, the first side column, and the second side column cancel each other, and a part of magnetic fluxes generated by the first winding and the second winding on the third magnetic core are superimposed, so that the third magnetic core can generate inductance. When a second current (the second current is the other of the differential-mode current and the common-mode current) is applied to the first winding and the second winding, a direction of a magnetic field generated by the first winding is the same as a direction of a magnetic field generated the second winding. In this case, magnetic fluxes generated by the first winding and the second winding on the third magnetic core cancel each other, and magnetic fluxes generated by the first winding and the second winding on the first middle column, the second middle column, the first side column, and the second side column are superimposed, so that the first magnetic core and the second magnetic core can generate inductance.

It can be learned that the inductor provided in this disclosure can generate the inductance when the differential-mode current or the common-mode current are applied. In this case, the inductor can generate both differential-mode inductance and common-mode inductance. The inductor provided in this disclosure is an inductor integrating a differential-mode inductor and a common-mode inductor. Compared with a differential-mode inductor and a common-mode inductor that are independent in a related technology, the inductor provided in this disclosure occupies a small area of a printed circuit board (printed circuit board, PCB). This reduces a size, a weight, and costs of the single-phase power converter.

In addition, because the third magnetic core has the through hole, the third magnetic core does not separate the first middle column from the second middle column, so that there is only one air gap between the first middle column and the second middle column, and magnetic resistance between the first middle column and the second middle column is small. This helps the first magnetic core and the second magnetic core generate large inductance.

In a possible implementation, the third magnetic core is located between the two first side columns and between the two second side columns.

According to the technical solution provided in this disclosure, through the foregoing disposing, the third magnetic core does not separate the first side column from the second side column, and there is only one air gap between the first side column and the second side column, so that magnetic resistance between the first side column and the second side column is small. This helps the first magnetic core and the second magnetic core generate large inductance.

In a possible implementation, when a differential-mode current is applied to the first winding and the second winding, a direction of a magnetic field generated by the first winding is opposite to a direction of a magnetic field generated by the second winding. When a common-mode current is applied to the first winding and the second winding, a direction of a magnetic field generated by the first winding is the same as a direction of a magnetic field generated by the second winding. In other words, the first magnetic core and the second magnetic core are configured to generate common-mode inductance, and the third magnetic core is configured to generate differential-mode inductance.

That a direction of a magnetic field generated by the first winding is opposite to a direction of a magnetic field generated by the second winding means that a direction to which a thumb points when the first winding uses a right-handed screw rule (or referred to as an ampere rule) is opposite to a direction to which the thumb points when the second winding uses the right-handed screw rule. That a direction of a magnetic field generated by the first winding is the same as a direction of a magnetic field generated by the second winding means that a direction to which a thumb points when the first winding uses a right-handed screw rule is the same as a direction to which the thumb points when the second winding uses the right-handed screw rule.

According to the technical solution provided in this disclosure, because the differential-mode current is a working current of the inductor, the differential-mode inductance generated by the inductor does not need to be excessively large. Otherwise, the working current of the inductor is affected. The differential-mode inductance only needs to reduce an amplitude of a ripple current in the differential-mode current and slow down a change trend of the differential-mode current. Because the common-mode current is an interference current, the common-mode current needs to be eliminated. Therefore, the inductor needs to generate large common-mode inductance.

A size of the first magnetic core and a size of the second magnetic core are far greater than a size of the third magnetic core. Therefore, the first magnetic core and the second magnetic core are disposed to generate the common-mode inductance, and the third magnetic core is disposed to generate the differential-mode inductance. This helps implement the large common-mode inductance.

In a possible implementation, the first magnetic core and the second magnetic core are configured to generate common-mode inductance, and the third magnetic core is configured to generate differential-mode inductance.

In a possible implementation, a magnetic permeability of the first magnetic core and a magnetic permeability of the second magnetic core each are greater than a magnetic permeability of the third magnetic core. Magnetic saturation resistance of the third magnetic core is greater than magnetic saturation resistance of the first magnetic core and magnetic saturation resistance of the second magnetic core.

According to the technical solution provided in this disclosure, because the inductor needs to generate the large common-mode inductance, the magnetic permeability of the first magnetic core and the magnetic permeability of the second magnetic core are set to be large. This helps the first magnetic core and the second magnetic core generate the large common-mode inductance. In addition, the size of the first magnetic core and the size of the second magnetic core do not need to be excessively large.

Because the differential-mode current is the working current, a current value is large, and the third magnetic core is configured to generate the differential-mode inductance when the differential-mode current is applied to the inductor. Therefore, the third magnetic core needs to have sufficiently large magnetic saturation resistance. Otherwise, the third magnetic core fails in case of a high current.

In a possible implementation, a material of the first magnetic core and a material of the second magnetic core are ferrite, and a material of the third magnetic core is metal magnetic powder. The ferrite has a high magnetic permeability, and the ferrite may be manganese-zinc ferrite. The metal magnetic powder has large magnetic saturation resistance, and the metal magnetic powder may be iron-silicon-aluminum magnetic powder.

In a possible implementation, the inductor further includes a bottom plate and a support component. The first magnetic core and the second magnetic core are fastened to the bottom plate. The support component is fixedly connected to at least one of the first magnetic core and the second magnetic core, and the support component fastens the third magnetic core.

The first magnetic core and the second magnetic core can be fastened to the bottom plate in a manner of fastening through glue dispensing.

According to the technical solution provided in this disclosure, the bottom plate and the support component are disposed, so that the third magnetic core can remain fixed, thereby avoiding a change in an electrical parameter of the inductor caused by a shift of the third magnetic core. In addition, it can be further ensured that gaps between the third magnetic core and the first winding and the second winding are stable, to avoid abrasion of sheaths of the first winding and the second winding caused by an excessively short distance between the first winding and the third magnetic core and an excessively short distance between the second winding and the third magnetic core.

In a possible implementation, the support component includes a first support and a second support. The first support is fastened to the first magnetic core, and the first support has a first clamping part. The second support is fastened to the second magnetic core, and the second support has a second clamping part. The third magnetic core is clamped between the first clamping part and the second clamping part.

In a possible implementation, the first support includes a first bottom plate and two first side plates, and the two first side plates are opposite to each other and are both fastened to the first bottom plate. The first bottom plate has a first hole, the first hole is annularly sleeved on the first middle column, the two first side plates respectively abut against the two first side columns, and the two first side plates have first clamping parts. The second support includes a second bottom plate and two second side plates, and the two second side plates are opposite to each other and are both fastened to the second bottom plate. The second bottom plate has a second hole, the second hole is annularly sleeved on the second middle column, the two second side plates respectively abut against the two second side columns, and the two second side plates have second clamping parts.

According to a second aspect, this disclosure further provides a single-phase power converter. The single-phase power converter includes a direct current/direct current conversion circuit, a direct current/alternating current conversion circuit, and the inductor according to any one of the possible implementations of the first aspect. The direct current/alternating current conversion circuit has an L-pole output circuit and an N-pole output circuit. One of the first winding and the second winding of the inductor is connected to the L-pole output circuit, and the other is connected to the N-pole output circuit.

The single-phase power converter may be an inverter, for example, a photovoltaic inverter. The direct current/direct current conversion circuit is configured to regulate a voltage of a direct current. The direct current/alternating current conversion circuit is configured to convert the direct current into an alternating current. The inductor is configured to generate common-mode inductance when a common-mode current is applied, or generate differential-mode inductance when a differential-mode current is applied.

Compared with an inverter including a differential-mode inductor and a common-mode inductor, in the technical solution provided in this disclosure, because the inductor in the single-phase power converter is a component, the inductor does not occupy a large area of a PCB, thereby reducing a size, a weight, and costs of the single-phase power converter.

In a possible implementation, a unidirectional inverter system further includes a filter, and the filter is located between the direct current/alternating current conversion circuit and the inductor. The filter may be a filter including an inductor (inductor) and a capacitor (capacitor), and may be referred to as an LC filter for short.

### BRIEF DESCRIPTION OF DRAWINGS

FIG. 1 is a diagram of an inverter in a related technology;
FIG. 2 is a diagram of a single-phase power converter according to an embodiment of this disclosure;
FIG. 3 is a diagram of a structure of an inductor according to an embodiment of this disclosure;
FIG. 4 is an exploded view of an inductor according to an embodiment of this disclosure;
FIG. 5 is a cross-sectional view of an inductor according to an embodiment of this disclosure;
FIG. 6 is a diagram of a magnetic field of the inductor shown in FIG. 3 according to an embodiment of this disclosure;
FIG. 7 is a diagram of a magnetic field of the inductor shown in FIG. 3 according to an embodiment of this disclosure;
FIG. 8 is a diagram of a magnetic field of the inductor shown in FIG. 3 according to an embodiment of this disclosure;
FIG. 9 is a diagram of a magnetic field of the inductor shown in FIG. 3 according to an embodiment of this disclosure;
FIG. 10 is a diagram of a magnetic field of an inductor in which no through hole is disposed in a third magnetic core according to an embodiment of this disclosure;
FIG. 11 is a diagram of a magnetic field of an inductor in which no through hole is disposed in a third magnetic core according to an embodiment of this disclosure;
FIG. 12 is a diagram of a structure of an inductor according to an embodiment of this disclosure;
FIG. 13 is a diagram of a magnetic field of the inductor shown in FIG. 12 according to an embodiment of this disclosure;
FIG. 14 is a diagram of a magnetic field of the inductor shown in FIG. 12 according to an embodiment of this disclosure; and
FIG. 15 is a diagram of a third magnetic core and a support component according to an embodiment of this disclosure.

Descriptions of reference numerals:
100: direct current/direct current conversion circuit, 200: direct current/alternating current conversion circuit, 201: L-pole output circuit, 202: N-pole output circuit, 300: filter, 400: inductor, 401: differential-mode inductor, and 402: common-mode inductor;
1: first magnetic core, 11: first bottom, 12: first middle column, and 13: first side column;
2: second magnetic core, 21: second bottom, 22: second middle column, and 23: second side column;
3: first winding, and 4: second winding;
5: third magnetic core, and 50: through hole;
6: bottom plate;
7: support component, 71: first support, 710: first hole, 711: first bottom plate, 712: first side plate, 7121: first clamping part, 72: second support, 720: second hole, 721: second bottom plate, 722: second side plate, and 7221: second clamping part.

### DESCRIPTION OF EMBODIMENTS

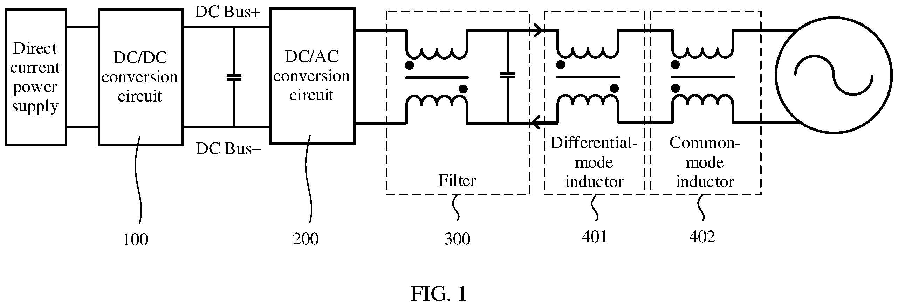

An inverter (inverter) is a converter that converts a direct current (electricity from a photovoltaic panel, a battery, or a storage battery) into an alternating current with a constant frequency and a constant voltage or with a modulated frequency and a regulated voltage. As shown in FIG. 1, an inverter in a related technology includes a direct current/direct current conversion circuit 100, a direct current/alternating current conversion circuit 200, a filter 300, a differential-mode inductor 401, and a common-mode inductor 402.

The direct current/direct current conversion circuit 100 is electrically connected to a direct current power supply, and is configured to regulate a voltage of a direct current generated by the direct current power supply. The direct current/alternating current conversion circuit 200 is configured to convert the direct current into an alternating current. The filter 300 is configured to filter out noise and harmonics in a circuit, to ensure stable operation of the inverter. The filter 300 may be a filter including an inductor and a capacitor, and may be referred to as an LC filter for short. The differential-mode inductor 401 is configured to generate inductance when a differential-mode current (namely, a normal working current) is applied. The inductance may be referred to as differential-mode inductance, to reduce an amplitude of a ripple current in the circuit, so that the inverter meets a performance indicator requirement of grid connection or load connection. The common-mode inductor 402 is configured to generate inductance when a common-mode current is applied. The inductance may be referred to as common-mode inductance, to suppress common-mode interference on an alternating current side. The inverter may be configured to connect to a power grid or a load.

In the related technology, the differential-mode inductor 401 and the common-mode inductor 402 are two independent components, and the differential-mode inductor 401 and the common-mode inductor 402 occupy a large area of a printed circuit board (printed circuit board, PCB). Consequently, the inverter has disadvantages of a large size, a heavy weight, and high costs.

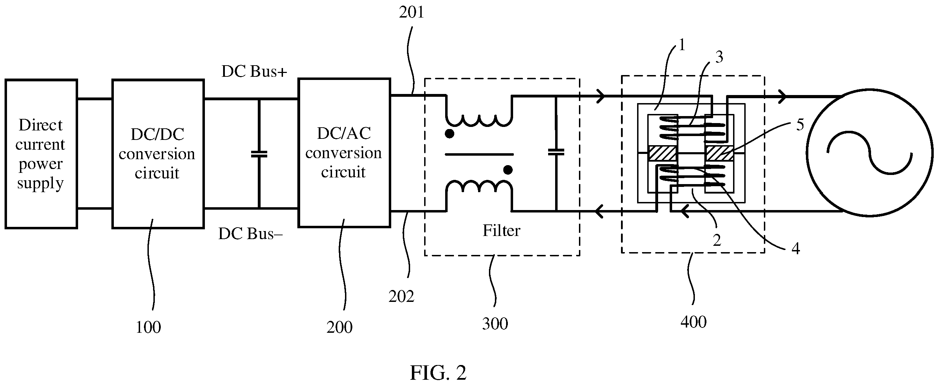

In view of the foregoing technical problem, embodiments of this disclosure provide a single-phase power converter. The single-phase power converter includes a single-phase photovoltaic inverter and a power conversion system. As shown in FIG. 2, the single-phase power converter includes a direct current/direct current conversion circuit 100, a direct current/alternating current conversion circuit 200, a filter 300, and an inductor 400. The inductor 400 is a differential-/common-mode integrated inductor, and can generate both differential-mode inductance and common-mode inductance. In addition, because the inductor 400 is a component, compared with the differential-mode inductor 401 and the common-mode inductor 402 in the related technology, the inductor 400 occupies a small area of a PCB, thereby reducing a size, a weight, and costs of the single-phase power converter. In some examples, a unidirectional inverter system may alternatively not include a filter 300.

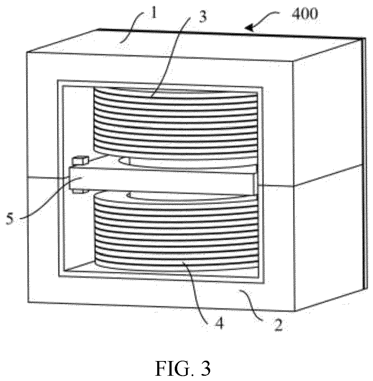

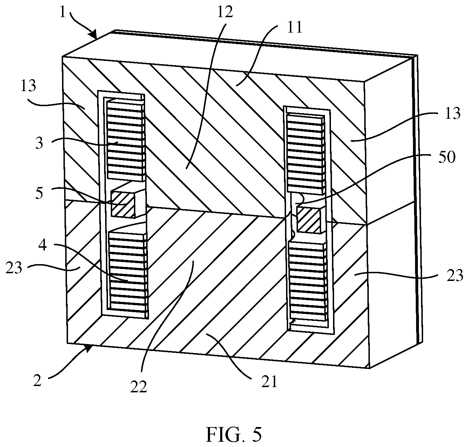

The following describes, by using an example, the inductor 400 in the single-phase power converter provided in embodiments of this disclosure. As shown in FIG. 3 to FIG. 5, the inductor 400 includes a first magnetic core 1, a second magnetic core 2, a first winding 3, a second winding 4, and a third magnetic core 5. The first magnetic core 1 includes a first bottom 11, a first middle column 12, and two first side columns 13. The two first side columns 13 and the first middle column 12 are fastened to the first bottom 11, and the first middle column 12 is located between the two first side columns 13. The second magnetic core 2 includes a second bottom 21, a second middle column 22, and two second side columns 23. The two second side columns 23 and the second middle column 22 are fastened to the second bottom 21, and the second middle column 22 is located between the two second side columns 23. The first middle column 12 is opposite to the second middle column 22. The two first side columns 13 are respectively opposite to the two second side columns 23. The first winding 3 is wound around the first middle column 12, and the second winding 4 is wound around the second middle column 22. The third magnetic core 5 is located between the first winding 3 and the second winding 4.

The first magnetic core 1 and the second magnetic core 2 may be E-type magnetic cores, PQ-type magnetic cores, EI-type magnetic cores, or the like. The third magnetic core 5 is an I-type magnetic core. The third magnetic core 5 may alternatively be referred to as a difference magnetic film. The first magnetic core 1 and the second magnetic core 2 may be symmetrically arranged with respect to the third magnetic core 5, and a material of the first magnetic core 1 may be the same as a material of the second magnetic core 2.

As shown in FIG. 2, the inductor 400 is used in the single-phase power converter, and the direct current/alternating current conversion circuit 200 has an L-pole output circuit 201 and an N-pole output circuit 202. In this case, two wiring terminals of the first winding 3 are connected to the L-pole output circuit 201, and two wiring terminals of the second winding 4 are connected to the N-pole output circuit 202. Alternatively, two wiring terminals of the first winding 3 are connected to the N-pole output circuit 202, and two wiring terminals of the second winding 4 are connected to the L-pole output circuit 201. At a same moment, a direction of an operating current on the L-pole output circuit 201 is opposite to a direction of an operating current on the N-pole output circuit 202. Therefore, a differential-mode current is an operating current. In addition, in some cases, the L-pole output circuit 201 and the N-pole output circuit 202 generate a common-mode current, causing common-mode interference, which is also referred to as electromagnetic interference (EMI). Therefore, the common-mode current is an interference current.

The first winding 3 and the second winding 4 may use a flat wire design or another form. The flat wire design can implement an automatic wire winding processing manner, reduce costs of the inductor 400, and improve production efficiency and product consistency.

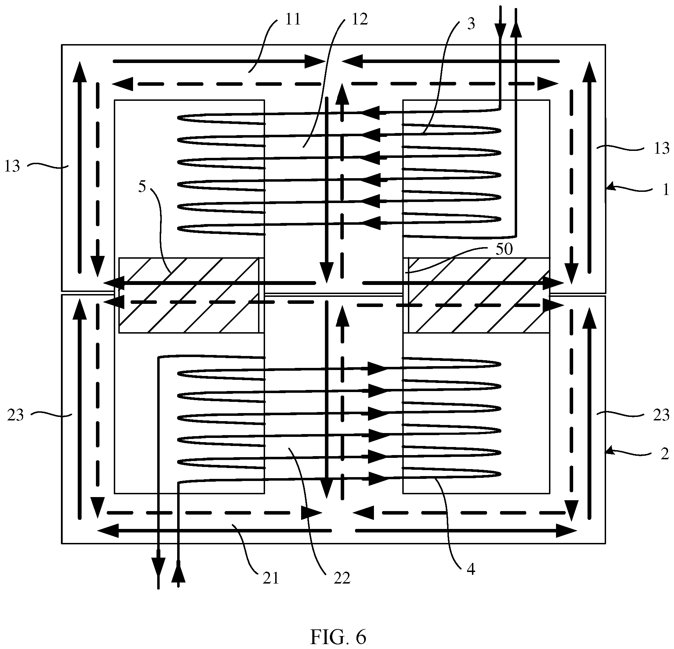

According to the technical solution provided in embodiments of this disclosure, as shown in FIG. 6, when a first current (the first current is one of a differential-mode current or a common-mode current) is applied to the first winding 3 and the second winding 4, a direction of a magnetic field generated by the first winding 3 is opposite to a direction of a magnetic field generated by the second winding 4. In this case, distribution of magnetic induction lines is shown in FIG. 6. That a direction of a magnetic field generated by the first winding 3 is opposite to a direction of a magnetic field generated by the second winding 4 means that a direction to which a thumb points when the first winding 3 uses a right hand grip rule (or referred to as an ampere rule) is opposite to a direction to which the thumb points when the second winding 4 uses the right hand grip rule. In other words, a direction of magnetic induction lines excited by the first winding 3 on the first middle column 12 and the second middle column 22 is opposite to a direction of magnetic induction lines excited by the second winding 4 on the first middle column 12 and the second middle column 22. It should be noted that, in FIG. 6 to FIG. 11, FIG. 13, and FIG. 14, a solid line represents the magnetic induction line generated by the first winding 3, and a dashed line represents the magnetic induction line generated by the second winding 4.

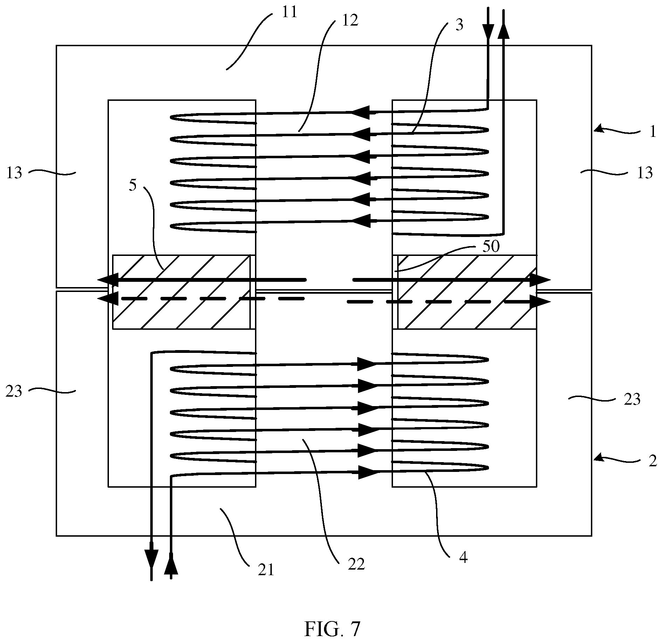

As shown in FIG. 6, if indication directions of magnetic induction lines generated by the first winding 3 on the first middle column 12, the second middle column 22, the first side column 13, and the second side column 23 are opposite to indication directions of magnetic induction lines generated by the second winding 4 on the first middle column 12, the second middle column 22, the first side column 13, and the second side column 23, magnetic fluxes generated by the first winding 3 and the second winding 4 on the first middle column 12, the second middle column 22, the first side column 13, and the second side column 23 cancel each other. If an indication direction of a part of magnetic induction lines generated by the first winding 3 on the third magnetic core 5 is the same as an indication direction of a part of magnetic induction lines generated the second winding 4 on the third magnetic core 5, magnetic fluxes generated by the first winding 3 and the second winding 4 on the third magnetic core 5 are superimposed. In this way, as shown in FIG. 7, the third magnetic core 5 can generate inductance.

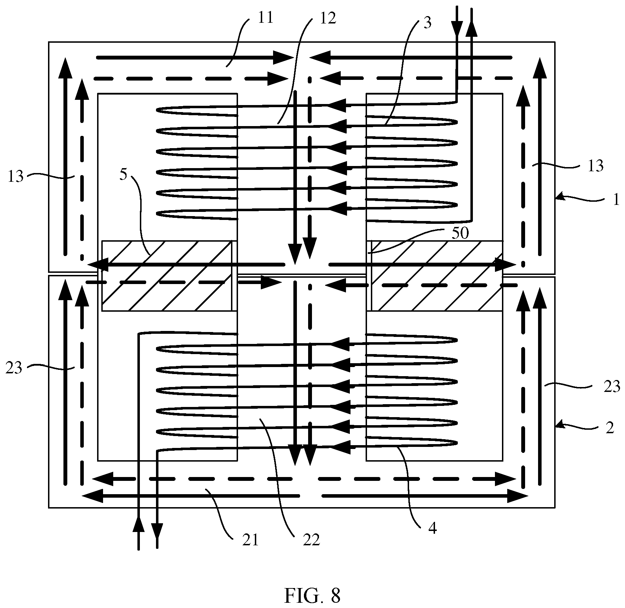

As shown in FIG. 8, when a second current (the second current is the other of the differential-mode current and the common-mode current) is applied to the first winding 3 and the second winding 4, a direction of a magnetic field generated by the first winding 3 is the same as a direction of a magnetic field generated the second winding 4. In this case, distribution of magnetic induction lines is shown in FIG. 8. That a direction of a magnetic field generated by the first winding 3 is the same as a direction of a magnetic field generated the second winding 4 means that a direction to which a thumb points when the first winding 3 uses a right-handed screw rule (or referred to as an ampere rule) is the same as a direction to which the thumb points when the second winding 4 uses the right-handed screw rule. In other words, a direction of magnetic induction lines excited by the first winding 3 on the first middle column 12 and the second middle column 22 is the same as a direction of magnetic induction lines excited by the second winding 4 on the first middle column 12 and the second middle column 22.

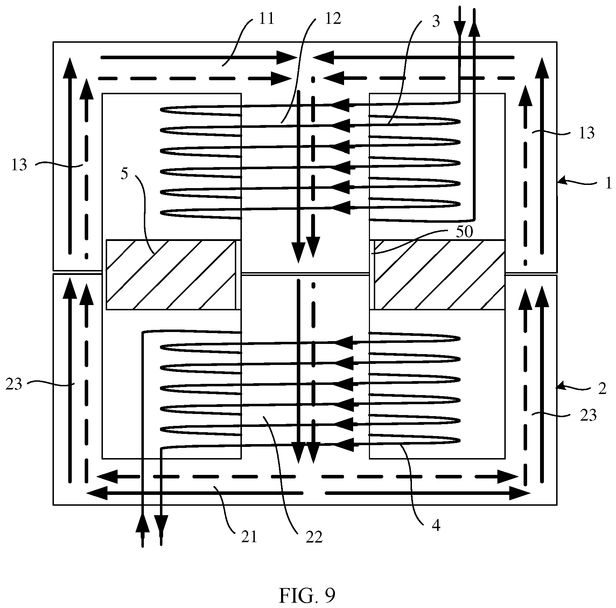

As shown in FIG. 8, if an indication direction of magnetic induction lines generated by the first winding 3 on the third magnetic core 5 is opposite to an indication direction of magnetic induction lines generated by the second winding 4 on the third magnetic core 5, magnetic fluxes generated by the first winding 3 and the second winding 4 on the third magnetic core 5 cancel each other. If indication directions of magnetic induction lines generated by the first winding 3 on the first middle column 12, the second middle column 22, the first side column 13, and the second side column 23 are the same as indication directions of magnetic induction lines generated by the second winding 4 on the first middle column 12, the second middle column 22, the first side column 13, and the second side column 23, magnetic fluxes of the first winding 3 and the second winding 4 on the first middle column 12, the second middle column 22, the first side column 13, and the second side column 23 are superimposed. In this way, as shown in FIG. 9, the first magnetic core 1 and the second magnetic core 2 can generate inductance.

It can be learned that the inductor 400 provided in embodiments of this disclosure can generate the inductance when the differential-mode current or the common-mode current are applied. In this case, the inductor 400 can generate both differential-mode inductance and common-mode inductance. The inductor 400 is an inductor integrating a differential-mode inductor and a common-mode inductor.

Which one of the first current and the second current is the differential-mode current and which one is the common-mode current is not limited in embodiments of this disclosure. Alternatively, this is described as follows: Which magnetic core generates the differential-mode inductance and which magnetic core generates the common-mode inductance are not limited in embodiments of this disclosure.

In some examples, because the differential-mode current is a working current of the inductor 400, the differential-mode inductance generated by the inductor 400 does not need to be excessively large (the differential-mode inductance is approximately 10 µH to 100 µH). Otherwise, the working current of the inductor 400 is affected. The differential-mode inductance only needs to reduce an amplitude of a ripple current in the differential-mode current and slow down a change trend of the differential-mode current. However, because the common-mode current is the interference current, or is interference noise in an EMI protection design, the common-mode current needs to be eliminated. Therefore, the inductor 400 needs to generate large common-mode inductance (approximately 1 mH or higher) to improve EMI protection.

In conclusion, the inductor 400 needs to generate the large common-mode inductance. A size of the first magnetic core 1 and a size of the second magnetic core 2 are far greater than a size of the third magnetic core 5. Therefore, the second current is set to the common-mode current. To be specific, when the common-mode current is applied to the first winding 3 and the second winding 4, the direction of the magnetic field generated by the first winding 3 is the same as the direction of the magnetic field generated by the second winding 4, so that the common-mode inductance is mainly generated by the first magnetic core 1 and the second magnetic core 2, and large common-mode inductance can be implemented. However, when the differential-mode current is applied to the first winding 3 and the second winding 4, the direction of the magnetic field generated by the first winding 3 is opposite to the direction of the magnetic field generated by the second winding 4, so that the differential-mode inductance is mainly generated by the third magnetic core 5.

In addition, based on a design requirement, a material of the first magnetic core 1 (or the second magnetic core 2) is different from a material of the third magnetic core 5. In some examples, because the first magnetic core 1 and the second magnetic core 2 need to generate large common-mode inductance, a magnetic permeability of the first magnetic core 1 and a magnetic permeability of the second magnetic core 2 may be set to be large, so that the first magnetic core 1 and the second magnetic core 2 can generate sufficiently large common-mode inductance. In addition, the first magnetic core 1 and the second magnetic core 2 do not need a large size. For example, a material of the first magnetic core 1 and a material of the second magnetic core 2 are ferrite (for example, manganese-zinc ferrite), and the ferrite has a high magnetic permeability.

In some examples, because the differential-mode current is the working current, a current value is large, and the third magnetic core 5 is configured to generate the differential-mode inductance when the differential-mode current is applied. Therefore, the third magnetic core 5 needs to have sufficiently large magnetic saturation resistance. Otherwise, the third magnetic core 5 fails in case of a high current. For example, a material of the third magnetic core 5 is metal magnetic powder (for example, iron-silicon-aluminum magnetic powder), and metal iron powder has large magnetic saturation resistance.

In some examples, a magnetic permeability of the first magnetic core 1 and a magnetic permeability of the second magnetic core 2 each are greater than a magnetic permeability of the third magnetic core 5. Magnetic saturation resistance of the third magnetic core 5 is greater than magnetic saturation resistance of the first magnetic core 1 and magnetic saturation resistance of the second magnetic core 2.

The following describes, by using examples, manners of forming a magnetic path formed by the first magnetic core 1, the second magnetic core 2, and the third magnetic core 5.

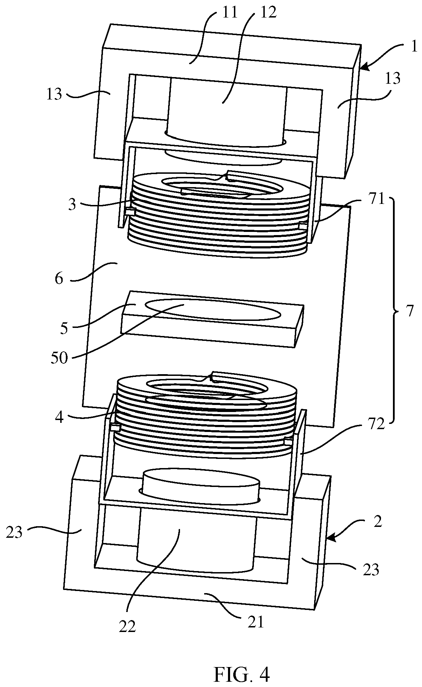

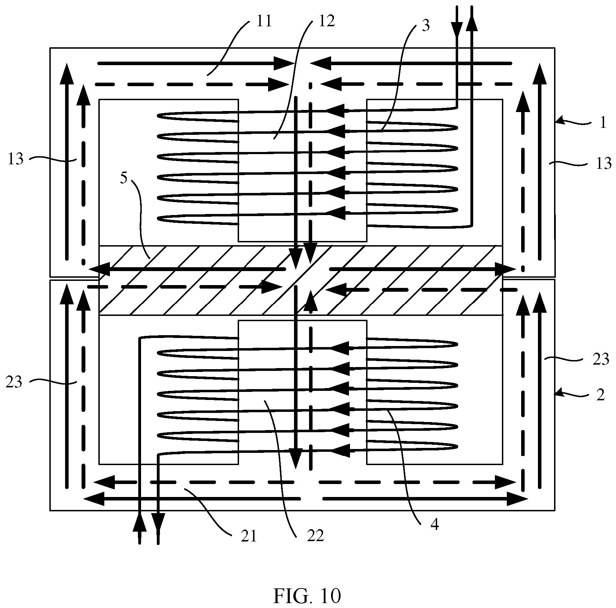

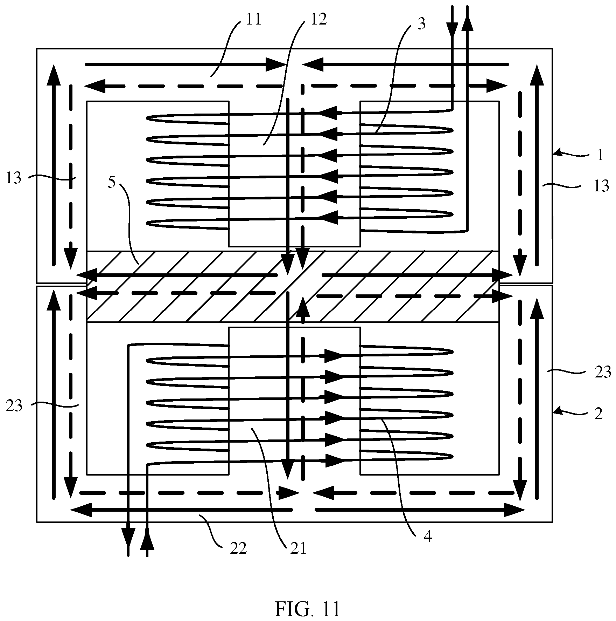

In some examples, as shown in FIG. 4 to FIG. 9, a through hole 50 is disposed on the third magnetic core 5, and the first middle column 12 and the second middle column 22 extend into the through hole 50. In some other examples, as shown in FIG. 10 and FIG. 11, the third magnetic core 5 does not have a through hole 50, and the third magnetic core 5 is located between the first middle column 12 and the second middle column 22. The following compares the foregoing two implementations.

As shown in FIG. 10 and FIG. 11, the third magnetic core 5 does not have the through hole 50. In this case, the first middle column 12 and the second middle column 22 are separated by the third magnetic core 5, and there are two air gaps between the first middle column 12 and the second middle column 22. The two air gaps are respectively an air gap between the first middle column 12 and the third magnetic core 5 and an air gap between the second middle column 22 and the third magnetic core 5. This causes large magnetic resistance between the first middle column 12 and the second middle column 22. In addition, because the material of the third magnetic core 5 is different from both the material of the first magnetic core 1 and the material of the second magnetic core 2, a change in the material of the magnetic core also generates large magnetic resistance. In this way, as shown in FIG. 10, when the common-mode current is applied to the first winding 3 and the second winding 4, the large magnetic resistance is not conducive to generating the large common-mode inductance by the inductor 400. If the common-mode inductance generated by the first magnetic core 1 and the second magnetic core 2 needs to be increased, a quantity of turns of the first winding 3 and the second winding 4 needs to be increased, and further, lengths of the first middle column 12 and the second middle column 22 need to be increased. Consequently, the size of the first magnetic core 1 and the size of the second magnetic core 2 are large.

As shown in FIG. 4 to FIG. 9, the third magnetic core 5 has the through hole 50. In this case, the first middle column 12 and the second middle column 22 are not separated by the third magnetic core 5, and there is only one air gap between the first middle column 12 and the second middle column 22. In this way, magnetic resistance between the first middle column 12 and the second middle column 22 is small. In addition, a material of the first middle column 12 is the same as a material of the second middle column 22, so that the magnetic resistance between the first middle column 12 and the second middle column 22 is small. In this way, when the common-mode current is applied to the first winding 3 and the second winding 4, the small magnetic resistance helps the inductor 400 generate the large common-mode inductance.

It should be additionally noted that whether the through hole 50 is disposed has small impact on the differential-mode inductance. Specifically, as shown in FIG. 11, for a case in which the third magnetic core 5 does not have the through hole 50, when the differential-mode current is applied to the first winding 3 and the second winding 4, a magnetic field line corresponding to the first winding 3 needs to pass through an air gap, namely, an air gap between an end wall of the first middle column 12 and the third magnetic core 5, when passing into the third magnetic core 5 from the first middle column 12. Similarly, a magnetic field line corresponding to the second winding 4 also needs to pass through an air gap, namely, an air gap between an end wall of the second middle column 22 and the third magnetic core 5, when passing into the third magnetic core 5 from the second middle column 22. However, as shown in FIG. 6, for a case in which the third magnetic core 5 has the through hole 50, when the differential-mode current is applied to the first winding 3 and the second winding 4, a magnetic field line corresponding to the first winding 3 also needs to pass through an air gap, namely, an air gap between a side wall of the first middle column 12 and a hole wall of the through hole 50, when passing into the third magnetic core 5 from the first middle column 12. Similarly, a magnetic field line corresponding to the second winding 4 also needs to pass through an air gap, namely, an air gap between a side wall of the second middle column 22 and the hole wall of the through hole 50, when passing into the third magnetic core 5 from the second middle column 22. It can be learned that regardless of whether the through hole 50 is disposed, quantities of air gaps through which the magnetic field lines corresponding to the first winding 3 and the second winding 4 pass when passing into the third magnetic core 5 from the middle column (the first middle column 12 or the second middle column 22) are the same. In addition, because large differential-mode inductance is not required, even if the differential-mode inductance is reduced by disposing the through hole 50, actually, there is no great impact.

In conclusion, the through hole 50 is disposed in the third magnetic core 5, and the first middle column 12 and the second middle column 22 are disposed to extend into the through hole 50. This helps the inductor 400 generate sufficiently large common-mode inductance. In addition, disposing of the through hole 50 has small impact on the differential-mode inductance.

In addition, as shown in FIG. 4 to FIG. 9, due to the through hole 50 exists, there is no third magnetic core 5 between the first middle column 12 and the second middle column 22. In this case, the common-mode inductance is not greatly affected when a material and a size of the third magnetic core 5 are adjusted based on the required differential-mode inductance, and it is easier to find a design balance point between the required differential-mode inductance and the common-mode inductance. It may be understood that, as shown in FIG. 10 and FIG. 11, when the through hole 50 is not disposed, adjustment on the common-mode inductance is further affected when the material and the size of the third magnetic core 5 are adjusted.

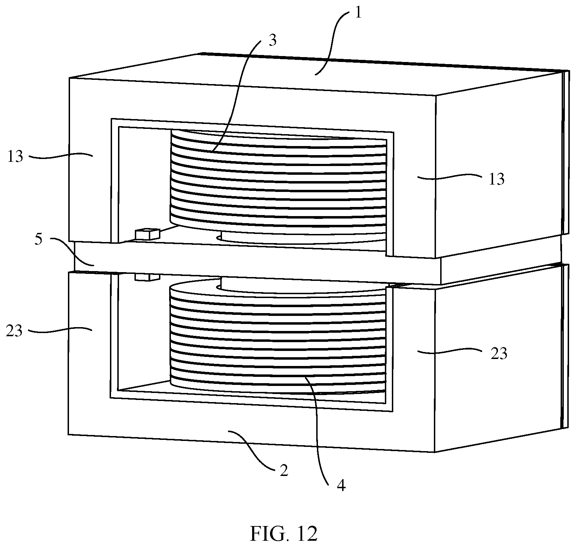

In some examples, as shown in FIG. 12 to FIG. 14, the third magnetic core 5 extends between the first side column 13 and the second side column 23. In some other examples, as shown in FIG. 4 to FIG. 9, the third magnetic core 5 is located on inner sides of the two first side columns 13 and inner sides of the two second side columns 23. The third magnetic core 5 is opposite to an air gap between the first side column 13 and the second side column 23. The following compares the foregoing two implementations.

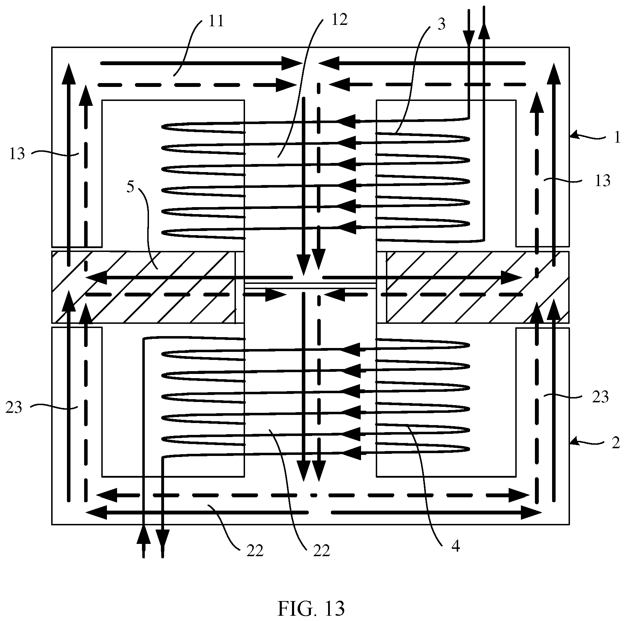

As shown in FIG. 13, the third magnetic core 5 extends between the first side column 13 and the second side column 23. In this case, there are two air gaps between the first side column 13 and the second side column 23: an air gap between the first side column 13 and the third magnetic core 5, and an air gap between the third magnetic core 5 and the second side column 23. As a result, magnetic resistance between the first side column 13 and the second side column 23 is large. In addition, because the material of the third magnetic core 5 is different from both the material of the first magnetic core 1 and the material of the second magnetic core 2, a change in the material of the magnetic core also generates large magnetic resistance. In this way, when the common-mode current is applied to the first winding 3 and the second winding 4, the large magnetic resistance is not conducive to generating the large common-mode inductance by the inductor 400. If the common-mode inductance provided by the first magnetic core 1 and the second magnetic core 2 needs to be increased, a quantity of turns of the first winding 3 and the second winding 4 needs to be increased, and further, lengths of the first middle column 12 and the second middle column 22 need to be increased. Consequently, the size of the first magnetic core 1 and the size of the second magnetic core 2 are large.

As shown in FIG. 8 and FIG. 9, the third magnetic core 5 is located on the inner sides of the two first side columns 13 and the inner sides of the two second side columns 23. In this case, there is only one air gap between the first side column 13 and the second side column 23. Therefore, magnetic resistance between the first side column 13 and the second side column 23 is small. In addition, a material of the first side column 13 is the same as a material of the second side column 23. In this way, the magnetic resistance between the first side column 13 and the second side column 23 is small. When the common-mode current is applied to the first winding 3 and the second winding 4, the small magnetic resistance helps the inductor 400 generate the large common-mode inductance.

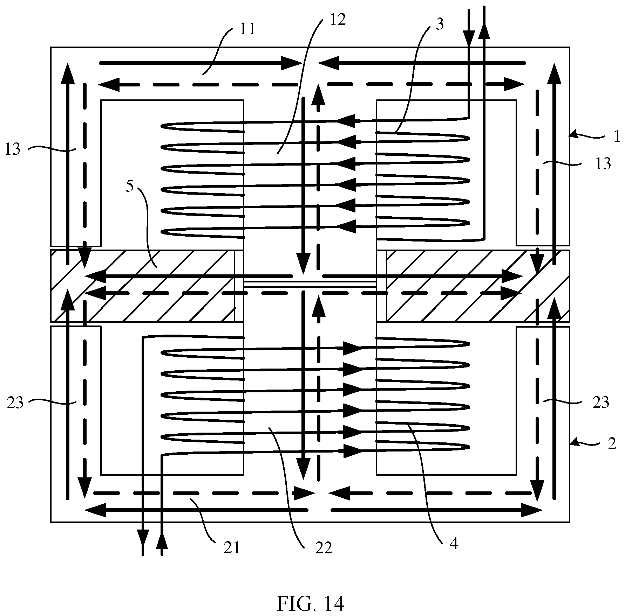

It should be noted that whether the third magnetic core 5 extends between the first side column 13 and the second side column 23 has small impact on the differential-mode inductance. Specifically, as shown in FIG. 14, when the third magnetic core 5 extends between the first side column 13 and the second side column 23, and the differential-mode current is applied to the first winding 3 and the second winding 4, the magnetic field line at the third magnetic core 5 needs to pass through an air gap, namely, an air gap between an end wall of the first side column 13 and the third magnetic core 5, when flowing into the first side column 13. Similarly, the magnetic field line at the third magnetic core 5 also needs to pass through an air gap, namely, an air gap between an end wall of the second side column 23 and the third magnetic core 5, when flowing into the second side column 23. However, as shown in FIG. 6 and FIG. 7, when the third magnetic core 5 is located on the inner sides of the two first side columns 13, and the differential-mode current is applied to the first winding 3 and the second winding 4, the magnetic field line at the third magnetic core 5 also needs to pass through an air gap, namely, an air gap between an inner side wall of the first side column 13 and the third magnetic core 5, when flowing into the first side column 13. Similarly, the magnetic field line at the third magnetic core 5 also needs to pass through an air gap, namely, an air gap between an inner side wall of the second side column 23 and the third magnetic core 5, when flowing into the second side column 23.

In conclusion, the third magnetic core 5 is disposed on the inner sides of the two first side columns 13 and the inner sides of the two second side columns 23, so that the inductor 400 can generate sufficiently large common-mode inductance.

In addition, as shown in FIG. 4 to FIG. 9, the third magnetic core 5 is disposed on the inner sides of the two first side columns 13, and there is no third magnetic core 5 between the first side column 13 and the second side column 23. In this case, the common-mode inductance is not greatly affected when a material and a size of the third magnetic core 5 are adjusted based on the required differential-mode inductance, and it is easier to find a design balance point between the required differential-mode inductance and the common-mode inductance. It may be understood that, when the third magnetic core 5 is disposed between the first side column 13 and the second side column 23, adjustment on the common-mode inductance is further affected when the material and the size of the third magnetic core 5 are adjusted.

The following describes, by using an example, a manner of assembling the inductor 400.

In some examples, as shown in FIG. 4, the inductor 400 further includes a bottom plate 6, and the first magnetic core 1 and the second magnetic core 2 are fastened to the bottom plate 6. The first magnetic core 1 and the second magnetic core 2 can be fastened to the bottom plate 6 in a manner of fastening through glue dispensing. In addition, because both the first middle column 12 and the two first side columns 13 are in contact with the bottom plate 6, the first magnetic core 1 can be firmly fastened to the bottom plate 6. Based on the same reason, the second magnetic core 2 can also be firmly fastened to the bottom plate 6.

A manner of fastening the third magnetic core 5 is not limited in embodiments of this disclosure. In some examples, the third magnetic core 5 is fastened to the bottom plate 6 in a manner of fastening through glue dispensing. However, because only one side wall of the third magnetic core 5 is fastened to the bottom plate 6, stability of the third magnetic core 5 is poor, and the third magnetic core 5 may shift during working.

To resolve the foregoing technical problem, in some examples, as shown in FIG. 4, the inductor 400 further includes a support component 7. The support component 7 is fixedly connected to at least one of the first magnetic core 1 and the second magnetic core 2, and the support component 7 fastens the third magnetic core 5. In this way, stability of the third magnetic core 5 can be improved, to avoid a change in an electrical parameter of the inductor caused by a shift of the third magnetic core 5. In addition, it can be further ensured that gaps between the third magnetic core 5 and the first winding 3 and the second winding 4 are stable, to avoid abrasion of sheaths of the first winding 3 and the second winding 4 caused by an excessively short distance between the first winding 3 and the third magnetic core 5 and an excessively short distance between the second winding 4 and the third magnetic core 5.

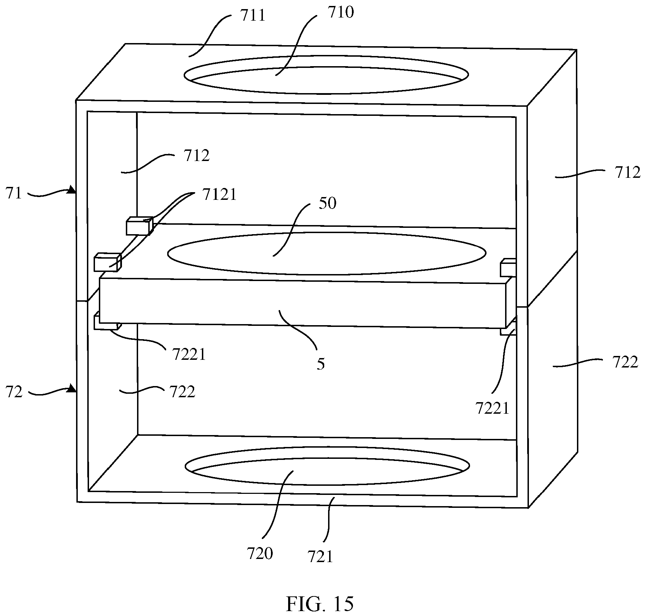

In some examples, as shown in FIG. 4 and FIG. 15, the support component 7 includes a first support 71 and a second support 72. The first support 71 is fastened to the first magnetic core 1, and the first support 71 has a first clamping part 7121. The second support 72 is fastened to the second magnetic core 2, and the second support 72 has a second clamping part 7221. The third magnetic core 5 is clamped between the first clamping part 7121 and the second clamping part 7221. The first support 71 and the second support 72 are symmetrically arranged with respect to the third magnetic core 5. Disposing the two supports can enable the third magnetic core 5 to be subject to a more uniform force, thereby helping the third magnetic core 5 to remain stable.

In some examples, the third magnetic core 5 is fixedly connected to the first clamping part 7121 and the second clamping part 7221 in a manner of fastening through glue dispensing.

In some examples, as shown in FIG. 15, the first support 71 includes a first bottom plate 711 and two first side plates 712, and the two first side plates 712 are opposite to each other and are both fastened to the first bottom plate 711. The first bottom plate 711 has a first hole 710, the first hole 710 is annularly sleeved on the first middle column 12, the two first side plates 712 respectively abut against the two first side columns 13, and the two first side plates 712 have first clamping parts 7121. The second support 72 includes a second bottom plate 721 and two second side plates 722, and the two second side plates 722 are opposite to each other and are both fastened to the second bottom plate 721. The second bottom plate 721 has a second hole 720, the second hole 720 is annularly sleeved on the second middle column 22, the two second side plates 722 respectively abut against the two second side columns 23, and the two second side plates 722 have second clamping parts 7221.

Specific shapes of the first hole 710 and the second hole 720 are not limited in embodiments of this disclosure. The first hole 710 and the second hole 720 may be in shapes such as a circle, a rectangle, or a hexagon. Because the two first side plates 712 respectively abut against the two first side columns 13, the two first side columns 13 limit the two first side plates 712, so that the first support 71 can be fastened to the first magnetic core 1. Similarly, the two second side columns 23 limit the two second side plates 722, so that the second support 72 can be fastened to the second magnetic core 2. The first side plate 712 abuts against the second side plate 722, the first bottom plate 711 abuts against the first bottom 11, and the second bottom plate 721 abuts against the second bottom 21.

In some examples, as shown in FIG. 15, the first clamping part 7121 is a limiting block on the first side plate 712, and each first side plate 712 may have two limiting blocks. The second clamping part 7221 is a limiting block on the second side plate 722, and each second side plate 722 may have two limiting blocks. The limiting block on the first side plate 712 and the limiting block on the second side plate 722 clamp the third magnetic core 5, and dispensing glue may be disposed between the limiting block and the third magnetic core 5. In this way, fastening of the first clamping part 7121 and the second clamping part 7221 on the third magnetic core 5 is strengthened.

The following describes, by using an example, a process of assembling the inductor.

First, the first middle column 12 passes through the first hole 710 of the first support 71, the first bottom plate 711 of the first support 71 abuts against the first bottom 11 of the first magnetic core 1, the first side plate 712 abuts against the first side column 13, and the first winding 3 is wound around the first middle column 12.

Then, the second middle column 22 passes through the second hole 720 of the second support 72, the second bottom plate 721 of the second support 72 abuts against the second bottom 21 of the second magnetic core 2, the second side plate 722 abuts against the second side column 23, and the second winding 4 is wound around the second middle column 22.

Then, the third magnetic core 5 is annularly sleeved on the first middle column 12, one side of the third magnetic core 5 is connected to the first clamping part 7121 through an adhesive, and the second clamping part 7221 is connected to the other side of the third magnetic core 5, so that the first clamping part 7121 and the second clamping part 7221 clamp the third magnetic core 5. Finally, the first magnetic core 1 and the third magnetic core 5 are fastened to the bottom plate 6, to complete assembly of the inductor.

The foregoing descriptions are merely optional embodiments of this disclosure, but are not intended to limit this disclosure. Any modification, equivalent replacement, improvement, or the like made within the principle of this disclosure should fall within the protection scope of this disclosure.

## Claims

1. An inductor, wherein the inductor comprises a first magnetic core (1), a second magnetic core (2), a first winding (3), a second winding (4), and a third magnetic core (5), wherein
the first magnetic core (1) comprises a first bottom (11), a first middle column (12), and two first side columns (13), the two first side columns (13) and the first middle column (12) are fastened to the first bottom (11), and the first middle column (12) is located between the two first side columns (13);
the second magnetic core (2) comprises a second bottom (21), a second middle column (22), and two second side columns (23), the two second side columns (23) and the second middle column (22) are fastened to the second bottom (21), and the second middle column (22) is located between the two second side columns (23);
the first middle column (12) is opposite to the second middle column (22), and the two first side columns (13) are respectively opposite to the two second side columns (23);
the first winding (3) is wound around the first middle column (12), and the second winding (4) is wound around the second middle column (22); and
the third magnetic core (5) is located between the first winding (3) and the second winding (4), the third magnetic core (5) has a through hole (50), and both the first middle column (12) and the second middle column (22) extend into the through hole (50).

2. The inductor according to claim 1, wherein the third magnetic core (5) is located between the two first side columns (13) and between the two second side columns (23).

3. The inductor according to claim 1 or 2, wherein when a differential-mode current is applied to the first winding (3) and the second winding (4), a direction of a magnetic field generated by the first winding (3) is opposite to a direction of a magnetic field generated by the second winding (4); or
when a common-mode current is applied to the first winding (3) and the second winding (4), a direction of a magnetic field generated by the first winding (3) is the same as a direction of a magnetic field generated by the second winding (4).

4. The inductor according to any one of claims 1 to 3, wherein the first magnetic core (1) and the second magnetic core (2) are configured to generate common-mode inductance, and the third magnetic core (5) is configured to generate differential-mode inductance.

5. The inductor according to any one of claims 1 to 4, wherein a magnetic permeability of the first magnetic core (1) and a magnetic permeability of the second magnetic core (2) each are greater than a magnetic permeability of the third magnetic core (5); and
magnetic saturation resistance of the third magnetic core (5) is greater than magnetic saturation resistance of the first magnetic core (1) and magnetic saturation resistance of the second magnetic core (2).

6. The inductor according to any one of claims 1 to 5, wherein a material of the first magnetic core (1) and a material of the second magnetic core (2) are ferrite, and a material of the third magnetic core (5) is metal magnetic powder.

7. The inductor according to any one of claims 1 to 6, wherein the inductor further comprises a bottom plate (6) and a support component (7), wherein
the first magnetic core (1) and the second magnetic core (2) are fastened to the bottom plate (6); and
the support component (7) is fixedly connected to at least one of the first magnetic core (1) and the second magnetic core (2), and the support component (7) fastens the third magnetic core (5).

8. The inductor according to claim 7, wherein the support component (7) comprises a first support (71) and a second support (72);
the first support (71) is fastened to the first magnetic core (1), and the first support (71) has a first clamping part (7121);
the second support (72) is fastened to the second magnetic core (2), and the second support (72) has a second clamping part (7221); and
the third magnetic core (5) is clamped between the first clamping part (7121) and the second clamping part (7221).

9. The inductor according to claim 8, wherein the first support (71) comprises a first bottom plate (711) and two first side plates (712), and the two first side plates (712) are opposite to each other and are both fastened to the first bottom plate (711);
the first bottom plate (711) has a first hole (710), the first hole (710) is annularly sleeved on the first middle column (12), the two first side plates (712) respectively abut against the two first side columns (13), and the two first side plates (712) have first clamping parts (7121);
the second support (72) comprises a second bottom plate (721) and two second side plates (722), and the two second side plates (722) are opposite to each other and are both fastened to the second bottom plate (721); and
the second bottom plate (721) has a second hole (720), the second hole (720) is annularly sleeved on the second middle column (22), the two second side plates (722) respectively abut against the two second side columns (23), and the two second side plates (722) have second clamping parts (7221).

10. A single-phase power converter, wherein the single-phase power converter comprises a direct current/direct current conversion circuit (100), a direct current/alternating current conversion circuit (200), and the inductor (400) according to any one of claims 1 to 9, wherein
the direct current/alternating current conversion circuit (200) has an L-pole output circuit (201) and an N-pole output circuit (202), and one of the first winding (3) and the second winding (4) of the inductor (400) is connected to the L-pole output circuit (201), and the other is connected to the N-pole output circuit (202).
